# EUROPEAN PATENT APPLICATION

(11) **EP 2 731 049 A1**
(43) Date of publication of application: **14.05.2014**
(21) Application number: 12192370.0
(22) Date of filing: 13.11.2012
(51) Int. Cl.: G06K 9/00, G06K 9/20

(54) **Eye-tracker**

(71) Applicant: Tobii Technology AB, 182 53 Danderyd (SE)
(72) Inventor: Blixt, Peter, 129 38 Hägersten (SE); Skogö, Mårten, 182 56 Danderyd (SE); Elvesjö, John, 112 45 Stockholm (SE)
(74) Representative: Wihlsson, Joakim Per Magnus

(57) **Abstract**

The position and/or gaze direction and/or gaze point of at least one eye (E) of a subject is tracked optically by illuminating a target region (TR) where the at least one eye (E) is expected to be located with light (L) within an illuminator wavelength range from 960 nm to 3000 nm via at least one light source (140). An image registering means (150) registers light within the illuminator wavelength range having been reflected against the subject. Based exclusively on the light registered within the illuminator wavelength range, the image registering means (150) produces image data (D_{IMG}). A processing means (160), in turn, receives the image data (D_{IMG}), and based thereon generates at least one signal (D_{E}) describing the position and/or gaze direction and/or gaze point of at least one eye (E).

## Description

### FIELD OF INVENTION

The present invention relates to registering of the position and/ or gaze direction and/or gaze point of a subject. More particularly, the invention relates to an apparatus according to the preamble of claim 1, a computing device according to claim 13 and a motor vehicle according to claim 14.

### THE BACKGROUND OF THE INVENTION AND PRIOR ART

So-called Pupil Centre Corneal Reflection (PCCR) eye trackers work ideally in two distinct modes, either bright pupil (BP) mode or dark pupil (DP) mode. The BP mode is optimized by arranging an illuminator coaxially with the optical axis of a camera used for registering images of a subject's eyes, such that light from the illuminator is reflected back from the subject's retina into the camera. The DP mode, on the other hand, is optimized by having the illuminator offset from the camera's optical axis.

In an actual implementation, however, there is always a mixture between the BP and DP modes. This means the pupil appears to have different gray levels depending on the illuminator offset.

### PROBLEMS ASSOCIATED WITH THE PRIOR ART

There are prior-art systems, wherein a simultaneous differential BP-DP image is generated. Such a system requires two sensors and a dichroic prism, where the sensors are aligned to one another very accurately (at least with µm precision) to ensure that the BP and DP images can be subtracted adequately from one another, i.e. with respect to light originating from the same physical position, and thus create a correct differential image.

As a less complex alternative, differential BP-DP images may be generated sequentially. However, systems applying this approach will suffer from motion artifacts. For example, microsaccades of the eyes occur in the time span range of 10 - 100 ms. Furthermore, head movements during normal operation may result in that the image of the eye moves over the sensor area at a speed exceeding one pixel per millisecond. This means that, for accurate eye-position detection, the delay between consecutive images shall be substantially less than 10 ms. For accurate gaze detection the delay must be even smaller. Additionally, quick changes in the surrounding light intensity can cause problems if the BP-DP images are registered sequentially in this manner.

As yet another alternative, a simultaneous differential image BP-DP system may use a modified Bayer pattern sensor; where every other pixel is sensitive to light of a first wavelength from a light source arranged as a BP illuminator, and every other pixel is sensitive to light of a second wavelength from a light source arranged as a DP illuminator. WO 2007/092512 describes a system, wherein BP and DP images are registered at different wavelengths and then subtracted from one another to generate a differential image. All image data from the BP image is cancelled by the image data from the DP image, except for the data representing the pupil. This, in turn, enables tracking of the eye. US 7,280,678 describes another example of such a system. Here, the resolution in each of the BP and DP modes only corresponds to 50% of the full sensor linear resolution. Therefore, the sensor needs to be four times larger for the same resolution as a corresponding monochrome sensor. Naturally, this is undesirable from a cost and size point-of-view.

Thus, a differential image BP-DP system either results in lower resolution than if the corresponding sensor was used for DP only; or a physically larger, more costly and/or more complicated system, than if the corresponding multiple sensors were used for DP only. Additionally, the power consumption of differential-image BP-DP system is comparable to that of a BP-only or DP-only system operating at twice the data rate. I.e. the power consumption per piece of gaze data is considerably higher.

A BP-only system is, of course, a simple solution. Nevertheless, this type of system generally suffers from poor response from Asian people. Furthermore, here, the illuminator needs to have a small aperture, and is therefore sensitive to eye tear film and any rough surfaces on cornea, or contact lenses.

A DP-only system, on the other hand, requires the use of relatively short non-visible IR wavelengths around 800 - 900 nm in order to attain sufficient sensitivity from the known image sensors. At these wavelengths, Caucasians, especially babies, will generate a gray pupil response having amplitudes similar to those of the iris signal. Consequently, the contrast between pupil and iris becomes too small to enable tracking. For technical reasons, however, DP illuminators are beneficial because they can be physically distributed, which facilitates cooling, decreases complexity and reduces visibility. For example, a standard dome-shaped diode, or an array of such diodes can be used as a DP illuminator.

One reason why BP-DP systems are employed is that it is generally very difficult to design a BP-only system, which works satisfactory on Asians, who usually have a poor BP response. Analogously, it is intricate to design a DP-only system, which works satisfactory on Caucasian babies, or Caucasian individuals with strong BP response. There are, however, systems supporting both BP and DP modes without applying a differential-image BP-DP approach, for instance the product T60 by Tobii Technology AB. Further, US 2010/0328444 describes an eye-tracker solution, wherein at least two cameras are used for imaging the eye. One camera is coaxial with a reference illuminator and at least one camera is non-coaxial with the reference illuminator. A controller adaptively selects one of the cameras to be active with the aim of maximizing an image quality metric and avoiding obscuring objects. Thus, there is a dynamic choice between BP and DP imaging.

A BP illuminator that works satisfactory for different individuals generally requires that the illuminator is positioned very close to the camera. At the same time, there is a trend in eye tracking to allow the "head movement box" within which the subject's head is expected to be located to increase for every new product generation. This either demands a higher emitted light quantity, or that the illuminator is spatially adjustable as in US 8,025,405. As discussed above, in both cases the illuminator must be small, so that it can be arranged close to the eye tracking camera to attain the desired BP effect.

Consequently, the design becomes relatively complex and expensive. The comparatively high light quantity that needs to be emitted towards the eye therefore leads to a very high surface intensity of the light that is directed towards the eye. This may result in that the illuminator visibility increases and becomes distracting for the eye tracker, especially at low sampling frequencies. Further, the eye safety risks increase when the image of the illuminator on the person's retina becomes small.

### SUMMARY OF THE INVENTION

The object of the invention is to mitigate the above problems and accomplish a cost and power efficient eye tracking solution which works reliably for all subjects regardless of age or ethnicity.

According to the invention, the object is achieved by the initially described apparatus, wherein the image registering means is configured to produce the image data exclusively based on light registered within the illuminator wavelength range 960-3000 nm.

This apparatus is advantageous because it enables use of a minimum number of light sources and sensors while maintaining acceptable quality. Thus, the solution is highly cost-efficient. Moreover, the light source(s) may have relatively large aperture, which reduces the visibility and the sensitivity to tear film and eye topology imperfections. The apparatus has also been found to work reliably on subjects of all ethnicities and ages.

Further, the proposed wavelength range as such has considerably less visibility than the shorter wavelengths used in the prior-art systems, and is less sensitive to ambient sunlight distortion due to a relatively high atmosphere absorption in this wavelength range. Namely, one major benefit of using the 960 to 3000 nm band is that ambient sunlight is attenuated by atmospheric absorption.

Typically, in eye tracking systems using shorter wavelengths, background light degrades the performance and renders outdoor eye-tracking very difficult. Even in-door eye tracking may be affected by sunlight through windows. However, by operating exclusively in the 960-3000 nm band, the ambient sunlight is highly suppressed because of the water absorption in the atmosphere within this wavelength range. The light absorption by the aqueous part of the eye is also the reason why the BP response is (or the DP contrast is high) at these wavelengths.

Naturally, the image registering means includes a sensor area with a range of sensitivity matching the illuminator wavelength range. It is further preferable if the illuminator wavelength range specifically matches a wavelength range within which the sunlight absorption in the atmosphere is particularly high. Therefore, the illuminator wavelength range may be from 960 nm to 1050 nm; and the image registering means may have a range of sensitivity centered around a wavelength approximately equal to 1005 nm; the illuminator wavelength range may be from 1130 nm to 1270 nm; and the image registering means may have a range of sensitivity centered around a wavelength approximately equal to 1200 nm; the illuminator wavelength range may be from 1380 nm to 1520 nm; and the image registering means may have a range of sensitivity centered around a wavelength approximately equal to 1450 nm; the illuminator wavelength range may be from 1880 nm to 2020 nm; and the image registering means may have a range of sensitivity centered around a wavelength approximately equal to 1950 nm; or the illuminator wavelength range may be from 1100 nm to 3000 nm; and the image registering means may have a range of sensitivity centered around a wavelength approximately equal to 2050 nm.

According to one preferred embodiment of the invention, it is presumed that the image registering means has an optical axis oriented in a general direction towards the target region. Each light source is arranged relative to the image registering means such that, measured from a center point of the target region, an angle between the optical axis and each light source towards the target region exceeds two degrees. In other words, the light source is separated from the image registering means by at least a particular distance in relation to a typical operating distance to the subject and his/her eyes. In a normal implementation, this may mean that each light source is arranged at a distance from the image registering means exceeding 10 mm, or more preferably 30 mm. Thereby, the risk of causing a bright-pupil effect is reduced significantly, and a stable dark-pupil response can be expected from any subject.

According to another preferred embodiment of the invention, the image registering means contains an input optical filter, which is arranged in front of a sensor area in the image registering means. The input optical filter has a passband configured to exclusively allow light within the illuminator wavelength range to reach the sensor area. Thus, any disturbance due to stray light outside the desired wavelength range can be avoided.

Moreover, the apparatus may contain at least one output optical filter arranged in an output beam path of the at least one light source, which output optical filter is configured to exclusively allow light within the illuminator wavelength range to be emitted from the at least one light source. Thereby, it is guaranteed that the subject is only actively illuminated with light that is also usable by the image registering means.

The proposed apparatus may either be represented by a stand-alone entity, or be integrated into another entity, e.g. a laptop, a tablet computer, an ultrabook, an all-in-one desktop computer, a smartphone or similar. Naturally, the apparatus may also be integrated into a motor vehicle, for example in order to assist a driver.

Further advantages, beneficial features and applications of the present invention will be apparent from the following description and the dependent claims.

### BRIEF DESCRIPTION OF THE DRAWINGS

The invention is now to be explained more closely by means of preferred embodiments, which are disclosed as examples, and with reference to the attached drawings.
- Figure 1: shows a schematic image of an apparatus according to one embodiment of the invention; and
- Figure 2: illustrates how light sources may be arranged relative to the image registering means according to one embodiment of the invention.

### DESCRIPTION OF PREFERRED EMBODIMENTS OF THE INVENTION

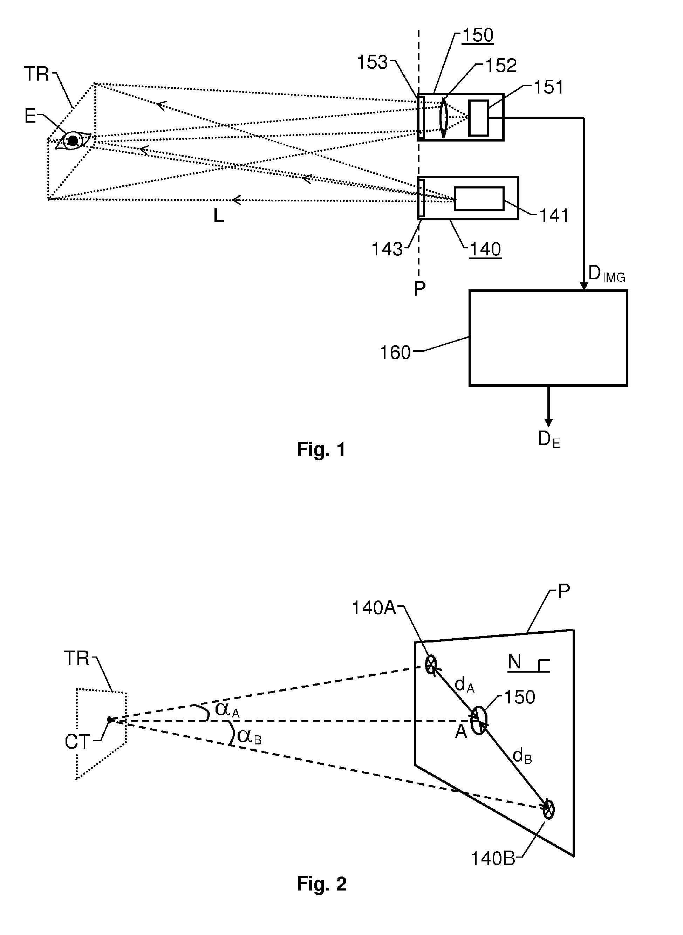

We refer initially to Figure 1 showing a schematic image of an apparatus according to one embodiment of the invention, which is intended for optical-based tracking of a position and/or gaze direction and/or gaze point of at least one eye E of a subject.

The proposed eye tracking apparatus is based on a DP-only approach, where the illuminators and image registering means are optimized to light within a wavelength range where the water molecule has absorption maxima.

The apparatus includes at least one light source 140, an image registering means 150 and a processing means 160. The processing means 160 may either be separate from the image registering means, or be included therein.

The light source 140 is configured to illuminate a target region TR, where the at least one eye E of the subject is expected to be located, with light L within an illuminator wavelength range from 960 nm to 3000 nm. Naturally, this does not mean that the light source must cover this entire range, however may emit light within a sub range thereof. For example, the illuminator wavelength range may be from 960 nm to 1050 nm, from 1130 nm to 1270 nm, from 1380 nm to 1520 nm, from 1880 nm to 2020 nm or from 1100 nm to 3000 nm. Namely, in each of these wavelength ranges the sunlight absorption in the atmosphere is particularly high. Thus, referring to the above sub-ranges, the image registering means 150 may have a range of sensitivity centered around a wavelength approximately equal to 1005 nm, 1200 nm, 1450 nm, 1950 nm or 2020 nm.

In any case, the image registering means 150 is configured to register light, within the illuminator wavelength range, that has been reflected against the subject, and exclusively based thereon, produce image data D_{IMG.} Therefore, the image registering means 150 preferably includes a sensor area with a range of sensitivity that matches the illuminator wavelength range. The processing means 160 is configured to receive the image data D_{IMG,} and based thereon generate at least one signal D_{E} describing the position and/or gaze direction and/or gaze point of at least one eye E of the subject.

According to one preferred embodiment of the invention, the image registering means 150 contains an input optical filter 153. This filter is arranged in front of a sensor area 151 in the image registering means 150 and has a passband configured to exclusively allow light within the illuminator wavelength range to reach the sensor area 151. Thus, any stray light outside the desired wavelength range is prevented from reaching the sensor area 151, and as a result disturbances are avoided.

According to one preferred embodiment of the invention, at least one output optical filter 143 is arranged in an output beam path L of the at least one light source 140. This filter 143 is configured to exclusively allow light within the illuminator wavelength range to be emitted from the at least one light source 140. Thereby, the subject in front of the apparatus is only actively illuminated with light that is usable by the image registering means 150 to produce the image data D_{IMG.}

Preferably, the image registering means 150 has a sensor area 151 with a range of sensitivity that matches the illuminator wavelength range. This is especially important if the at least one light source 140 only emits light within a sub range of the illuminator wavelength range 960-3000 nm, for example 960-1050 nm, 1130-1270 nm, 1380-1520 nm 1880-2020 nm or 1100-3000 nm. Further preferably, the sensor area's 151 range of sensitivity is centered around a wavelength approximately equal to the center of the illuminator wavelength range, i.e. for example at 1005 nm, 1200 nm, 1450 nm, 1950 nm or 2020 nm given the above examples of illuminator wavelength sub-ranges.

The inventors found that a DP illuminator having its spectrum centered around 980 nm is associated with maximum absorption in the aqueous parts of the eye, which enhances the dark level of the pupil, even at small or moderate offset angles. It is therefore preferable if the image registering means 150 contains a sensor area 151 optimized for 980 nm sensitivity, however being configured to produce image data D_{IMG} based on light ranging from 960 nm to 1050 nm. To this aim, the sensor area 151 may employ technology, which is based on quantum dots (e.g. by Invisage) or back-side illumination (BSI) pixels (e.g. by Omnivision or Sony). Nevertheless, thick-epilayer types of sensors are also applicable according to the invention. Alternatively, the sensor area 151 may contain a low-band-gap semiconductor material sandwiched between silicon layers using wafer fusion to enhance absorption around 980 nm, i.e. in the Near Infrared (NIR) spectrum. So-called black silicon material can be useful to enhance the absorption at the spectral window in which the proposed image registering means 150 operates. Generally, the sensitivity of the sensor area 151 is increased if these technologies are exploited. Thereby, it is possible to attain a good DP signal for younger Caucasians.

Further, in order to enable stereo vision and/or to introduce redundancy, one or more image registering means in addition to the image registering means 150 may be used. The use of two or more light sources (see e.g. 140A and 140B in Figure 2) likewise provides redundancy and enables depth measurement. Alternatively, an ultrasound system or structured light system may be employed to generate relevant spatial depth information for advanced image processing. Coded light systems and time-of-flight cameras provide alternative approaches to attain depth maps.

Figure 2 illustrates how two light sources 140A and 140B respectively may be arranged relative to the image registering means 150 according to one embodiment of the invention.

The inventors discovered that there are two clear dips in pupil intensity signal at 940 nm and 970 nm respectively relative other wavelengths. This effect is assumed to be caused by absorption peaks of the water molecule. The inventors therefore tested the DP response at both the wavelengths 940 nm and 970 nm. It was found that illumination by 940 nm light produces a DP effect if the light source was separated by 3.5 degrees or more from the image registering means 150, i.e. given that the image registering means 150 has an optical axis A oriented in a general direction towards a target region TR where the subject's eye E is located, the image registering means 150 and the light source 140 are arranged in a common plane P, such that the optical axis A is parallel to the normal N of the common plane P, and the light source 140 is arranged relative to the image registering means 150 such that, measured from a center point CT of the target region TR, the angle between the optical axis A and the light source 140 towards the target region TR exceeds 3.5 degrees. Correspondingly, illumination by 970 nm light produces the DP effect above 2 degrees.

Light Emitting Diodes (LEDs) for emitting 980-nm light are readily available today. Therefore, to optimize a system based on today's technology, a desired number existing 980 nm LED can be offset by more than 2 degrees from the image registering means 150 to represent the light sources 140A and 140B.

More precisely, the image registering means 150 may have an optical axis A oriented in a general direction towards the target region TR. The image registering means 150 and each of at least one light source 140A and 140B respectively may be arranged in a common plane P, such that the optical axis A is parallel to the normal N of the common plane P. The light sources 140A and 140B is arranged relative to the image registering means 150, such that, measured from a center point CT of the target region TR, an angle α_{A} and α_{B} between the optical axis A and the at least one light source 140A and 140B respectively towards the target region TR exceeds 2 degrees.

Given that an expected distance from the common plane P to the target region TR is around 30 cm and the angle α_{A}/α_{B} is 2 degrees, each of the at least one light source 140A and 140B shall be arranged at a distance d_{A} and d_{B} respectively from the image registering means 150 that exceeds 10 mm. Analogously, if the expected distance from the common plane P to the target region TR is around 90 cm and the angle α_{A}/α_{B} is 2 degrees, light sources 140A and 140B shall be arranged at a distance d_{A} and d_{B} respectively from the image registering means 150 that exceeds 30 mm.

Since a typical "head movement box" corresponds to an operation distance ranging from 30 cm to 90 cm, it is preferable that the light sources 140A and 140B are arranged at a distance d_{A} d_{B} respectively from the image registering means 150 exceeding 10 mm, or more preferably 30 mm.

Although the present invention concerns tracking of the position of a subject's eyes or gaze direction it is not excluded that, in addition thereto, the proposed apparatus is configured to track and/or analyze the subject's facial features, facial expressions and/or gestures. The invention may also be used to identify users based on their facial features and/or iris identification.

The term "comprises/comprising" when used in this specification is taken to specify the presence of stated features, integers, steps or components. However, the term does not preclude the presence or addition of one or more additional features, integers, steps or components or groups thereof.

The invention is not restricted to the described embodiments in the figures, but may be varied freely within the scope of the claims.

## Claims

1. An apparatus for optical-based tracking of a position and/ or gaze direction and/or gaze point of at least one eye (E) of a subject, the apparatus comprising:
at least one light source (140, 140A, 140B) configured to illuminate a target region (TR) where the at least one eye (E) of the subject is expected to be located with light (L) within an illuminator wavelength range from 960 nm to 3000 nm;
an image registering means (150) configured to register light within the illuminator wavelength range having been reflected against the subject, and based thereon produce image data (D_{IMG}); and
a processing means (160) configured to receive the image data (D_{IMG}), and based thereon generate at least one signal (D_{E}) describing the position and/or gaze direction and/or gaze point of at least one eye (E) of the subject,
**characterized in that** the image registering means (160) is configured to produce the image data (D_{IMG}) exclusively based on light registered within the illuminator wavelength range.

2. The apparatus according claim 1, wherein the image registering means (150) comprises a sensor area (151) with a range of sensitivity matching the illuminator wavelength range.

3. The apparatus according to any one of claims 1 or 2, wherein the at least one light source (140, 140A, 140B) has an illuminator wavelength range from 960 nm to 1050 nm; and the image registering means (150) has a range of sensitivity centered around a wavelength approximately equal to 1005 nm.

4. The apparatus according to any one of claims 1 or 2, wherein the at least one light source (140, 140A, 140B) has an illuminator wavelength range from 1130 nm to 1270 nm; and the image registering means (150) has a range of sensitivity centered around a wavelength approximately equal to 1200 nm.

5. The apparatus according to any one of claims 1 or 2, wherein the at least one light source (140, 140A, 140B) has an illuminator wavelength range from 1380 nm to 1520 nm; and the image registering means (150) has a range of sensitivity centered around a wavelength approximately equal to 1450 nm.

6. The apparatus according to any one of claims 1 or 2, wherein the at least one light source (140, 140A, 140B) has an illuminator wavelength range from 1880 nm to 2020 nm; and the image registering means (150) has a range of sensitivity centered around a wavelength approximately equal to 1950 nm.

7. The apparatus according to any one of claims 1 or 2, wherein the at least one light source (140, 140A, 140B) has an illuminator wavelength range from 1100 nm to 3000 nm; and the image registering means (150) has a range of sensitivity centered around a wavelength approximately equal to 2050 nm.

8. The apparatus according to any one of the preceding claims, wherein the image registering means (150) has an optical axis (A) oriented in a general direction towards the target region (TR), and the at least one light source (140A, 140B) is arranged relative to the image registering means (150) such that, measured from a center point (CT) of the target region (TR), an angle (α_{A}, α_{B}) between the optical axis (A) and the at least one light source (140A, 140B) towards the target region (TR) exceeds two degrees.

9. The apparatus according to claim 8, wherein the at least one light source (140A, 140B) is arranged at a distance (d_{A}, d_{B}) from the image registering means (150) exceeding 10 mm.

10. The apparatus according to claim 8, wherein the at least one light source (140A, 140B) is arranged at a distance (d_{A}, d_{B}) from the image registering means (150) exceeding 30 mm.

11. The apparatus according to any one of preceding claims, wherein the image registering means (150) comprises an input optical filter (153), which is arranged in front of a sensor area (151) in the image registering means (150) and has a passband configured to exclusively allow light within the illuminator wavelength range to reach the sensor area (151).

12. The apparatus according to any one of the preceding claims, comprising at least one output optical filter (143) arranged in an output beam path (L) of the at least one light source (140), the at least one output optical filter (143) being configured to exclusively allow light within the illuminator wavelength range to be emitted from the at least one light source (140).

13. A computing device comprising the apparatus according to any one of the preceding claims.

14. A motor vehicle comprising the apparatus according to any one of the claims 1 to 12.
